# EUROPEAN PATENT APPLICATION

(11) **EP 3 785 585 A1**
(43) Date of publication of application: **03.03.2021**
(21) Application number: 20192334.9
(22) Date of filing: 24.08.2020
(51) Int. Cl.: A47J 42/06, A47J 42/46

(54) **FOOD GRINDING DEVICE**

(30) Priority: 28.08.2019 CN 201921414314 U
(71) Applicant: Tsann Kuen (Zhangzhou) Enterprise Co., Ltd., Fujian 363107 (CN)
(72) Inventor: WEI, Hao-Chan, ZHANGZHOU, Fujian 363107 (CN)
(74) Representative: Regimbeau

(57) **Abstract**

A food grinding device includes a housing mechanism (1), a driving mechanism (2) disposed within the housing mechanism (1), a transmitting mechanism (3) coupled with the driving mechanism (2) and extending forwardly from the housing mechanism (1), and a grinding mechanism (5) coupled with the transmitting mechanism (3) and spaced apart from the driving mechanism (2) for grinding a food ingredient into powder. The grinding mechanism (5) defines a powder dropping port (612) penetrating in an up-and-down direction. The grinding mechanism (5) includes a revolving shaft assembly (72) which is separably inserted into and engaged with an underside of the transmitting mechanism (3) to rotate about an axis (L) in the up-and-down direction. A supporting assembly (71) for supporting the revolving shaft assembly (72) is substantially made of an electrically conductive composition, and is joined to the grinding assembly (70) by injection molding.

## Description

The disclosure relates to a food grinding device, and more particularly to a food grinding device for grinding food ingredients, such as coffee beans.

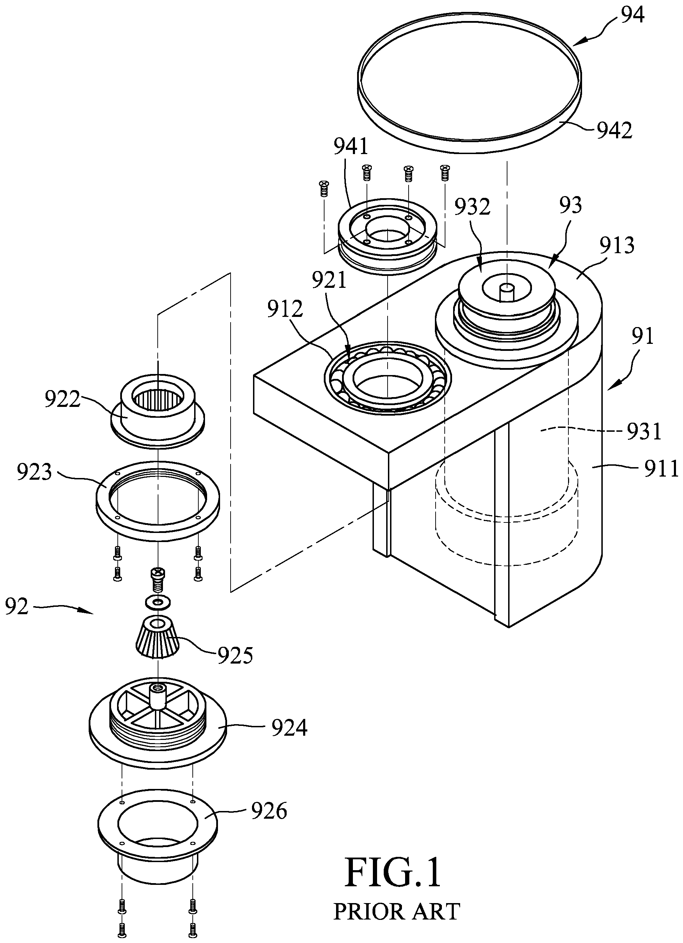

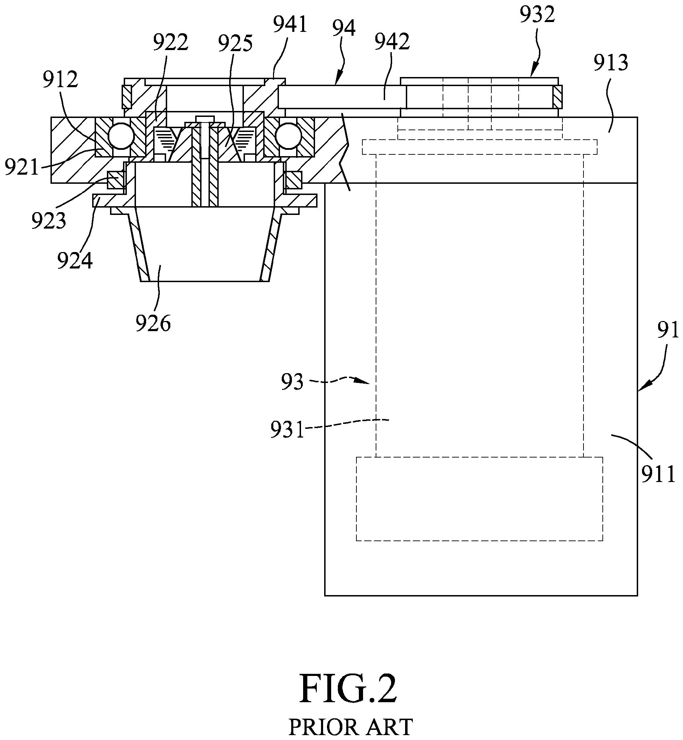

Referring to FIGS. 1 and 2, a conventional food grinding device is utilized to grind coffee beans into powder and includes a housing mechanism 91, a grinding mechanism 92 securely installed on a front portion of the housing mechanism 91, a driving mechanism 93 disposed within a rear portion of the housing mechanism 91, and a transmitting mechanism 94 coupled with the grinding mechanism 92 and the driving mechanism 93. The housing mechanism 91 includes an upright stand 911 and a suspending arm 913 extending forwardly from an upper end of the upright stand 911 and having a mounting hole 912 that penetrates in an up-and-down direction. The grinding mechanism 92 includes an anti-friction bearing 921 mounted in the mounting hole 912, a ring outer burr 922 surrounded by the anti-friction bearing 921 to be rotatable relative to the suspending arm 913, an axle mounting seat 924 securely mounted on a bottom portion of the suspending arm 913 and below the outer burr 922 by means of a ring fastener 923, a frusto-conical inner burr 925 sleeved on the axle mounting seat 924 and inwardly of the outer burr 922, and a powder dropping seat 926 securely mounted on and under the axle mounting seat 924. The driving mechanism 93 includes a motor 931, and a driving wheel 932 coupled with the motor 931 and disposed on the upper end of the upright stand 911. The transmitting mechanism 94 includes a transmitting wheel 941 secured on the outer burr 922, and a transmitting belt 942 trained on the transmitting wheel 941 and the driving wheel 932 such that the transmitting wheel 941 is rotated through the transmitting belt 942 and the driving wheel 932 when the motor 931 is operated to actuate rotation of the outer burr 922 relative to the inner burr 925 for grinding coffee beans into powder that is dropped downwardly through the axle mounting seat 924 and the powder dropping seat 926. However, the transmitting wheel 941 delimits and retains the outer burr 922 for the same to remain in place, but renders the disassembling and cleaning operations of the grinding mechanism 92 inconvenient and troublesome.

Moreover, a conventional food grinder machine, such as a coffee grinder machine, generally includes a supporting unit made of non-conductive plastic material, an upright rotating shaft unit rotatably supported on the supporting unit, and a burr unit having an outer annular part which is fixed on the supporting unit and surrounds the rotating shaft unit and an inner conical part which is mounted on and driven by the rotating shaft unit so as to rotate relative to the outer annular part for grinding coffee beans into powder.

However, during the grinding process, a large amount of electric charges are accumulated on the supporting unit and ground coffee beans due to contact friction between the burr unit and coffee beans, which causes the coffee powder to adhere to the supporting unit under the action of static electricity and to hence remain in the bean grinder, or which causes the coffee powder to fly scatteredly due to electrostatic repulsion. Thus, residue of coffee powder results in insufficient powder output from the coffee grinder, and the residue of coffee powder, when undesirably mixed with fresh ground coffee powder, will affect the quality of brewed coffee.

Therefore, an object of the disclosure is to provide a food grinding device that can alleviate at least one of the drawbacks of the prior art.

According to the disclosure, the food grinding device includes a housing mechanism, a driving mechanism disposed within the housing mechanism, a transmitting mechanism coupled with the driving mechanism and extending forwardly from the housing mechanism, and a grinding mechanism coupled with the transmitting mechanism and spaced apart from the driving mechanism for grinding a food ingredient into powder. The grinding mechanism defines a powder dropping port penetrating in an up-and-down direction. The grinding mechanism includes a revolving shaft assembly which is separably inserted into and engaged with an underside of the transmitting mechanism to rotate about an axis in the up-and-down direction.

Other features and advantages of the disclosure will become apparent in the following detailed description of the embodiments with reference to the accompanying drawings, of which:
FIG. 1 is an exploded perspective view of a conventional food grinding device;
FIG. 2 is a partly sectional view of the conventional food grinding device;
FIG. 3 is a perspective view illustrating an embodiment of a food grinding device according to the disclosure;
FIG. 4 is an exploded perspective view of the embodiment;
FIG. 5 is a sectional view taken along a front-and-rear direction, part of the embodiment being omitted for the sake of clarity;
FIG. 6 is a sectional view taken along a line passing through a supporting assembly, part of the embodiment being omitted for the sake of clarity;
FIG. 7 is a fragmentary, exploded perspective view illustrating a grinding unit, a lower bracket and an upper bracket of the embodiment;
FIG. 8 is an exploded perspective view illustrating a state when the grinding unit and the lower bracket are detached;
FIG. 9 is a fragmentary, exploded perspective view illustrating another embodiment of the food grinding device according to the disclosure;
FIG. 10 is an exploded perspective view illustrating a gear unit of the embodiment in FIG. 9;
FIG. 11 is a perspective view illustrating an embodiment of a food grinding device according to the disclosure;
FIG. 12 is an exploded perspective view of a grinding unit of the embodiment, in which some injection molded component parts of the embodiment are shown in a non-joining manner for the sake of clarity;
FIG. 13 is a sectional view of the grinding unit of the embodiment; and
FIG. 14 is an exploded sectional view of the grinding unit of the embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

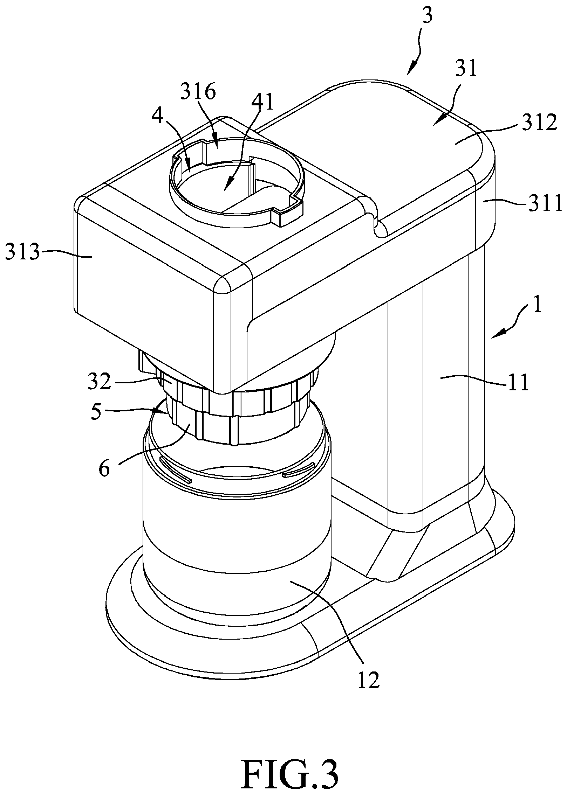

Referring to FIGS. 3 to 5, an embodiment of a food grinding device according to the disclosure is employed for grinding food ingredients, such as coffee beans, coarse salt, spices, and pepper corns, into powder.

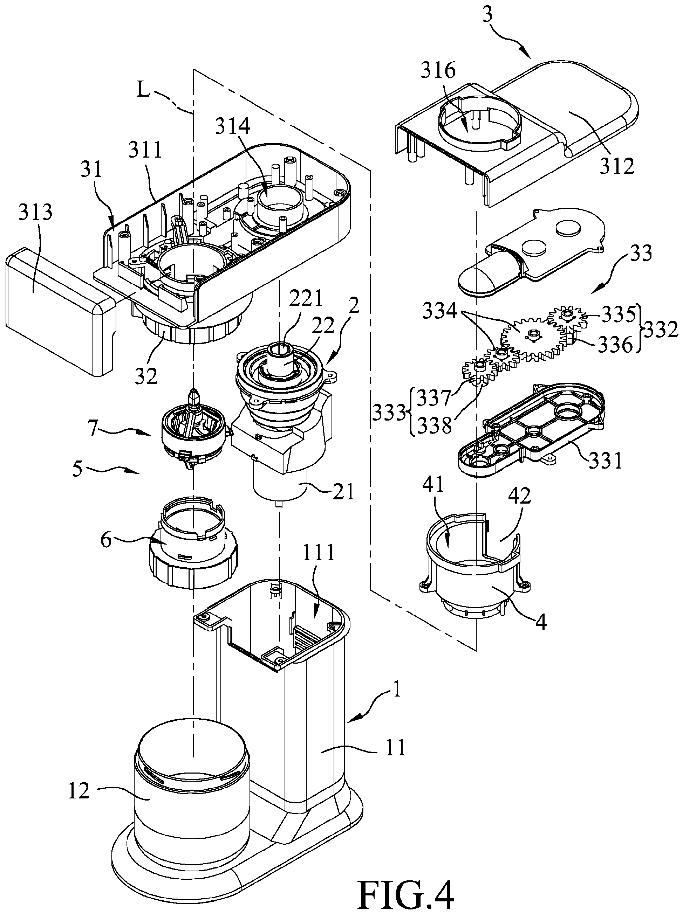

With reference to FIGS. 4 to 7, the food grinding device includes a housing mechanism 1, a driving mechanism 2 disposed within the housing mechanism 1, a transmitting mechanism 3 coupled with the driving mechanism 2 and extending forwardly from the housing mechanism 1, a hopper mechanism 4 installed above the transmitting mechanism 3, and a grinding mechanism 5 coupled with the transmitting mechanism 3 and spaced apart from the driving mechanism 2 for grinding food ingredients into powder.

The housing mechanism 1 includes an L-shaped stand 11, and a powder container 12 disposed on a base of the stand 11. The stand 11 defines therein an accommodation space 111 (see FIG. 4) for accommodating the driving mechanism 2. The driving mechanism 2 includes a driving motor 21 (see FIG. 4) which is disposed in the accommodation space 111, and a driving shaft 22 extending upwardly into the transmitting mechanism 3. The driving shaft 22 has a coupling hole 221 having a non-circular cross-section, such as a hexagonal hole.

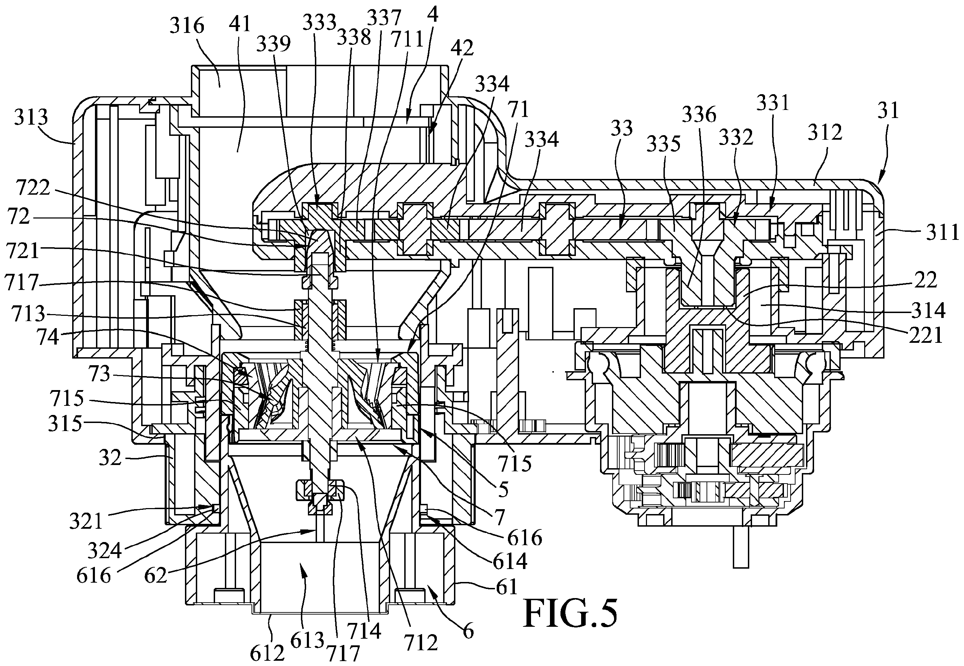

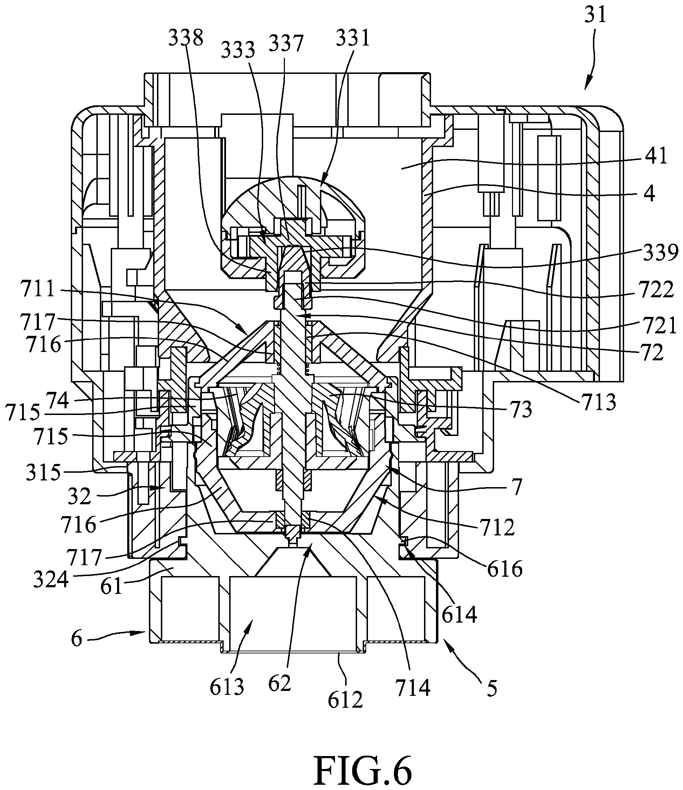

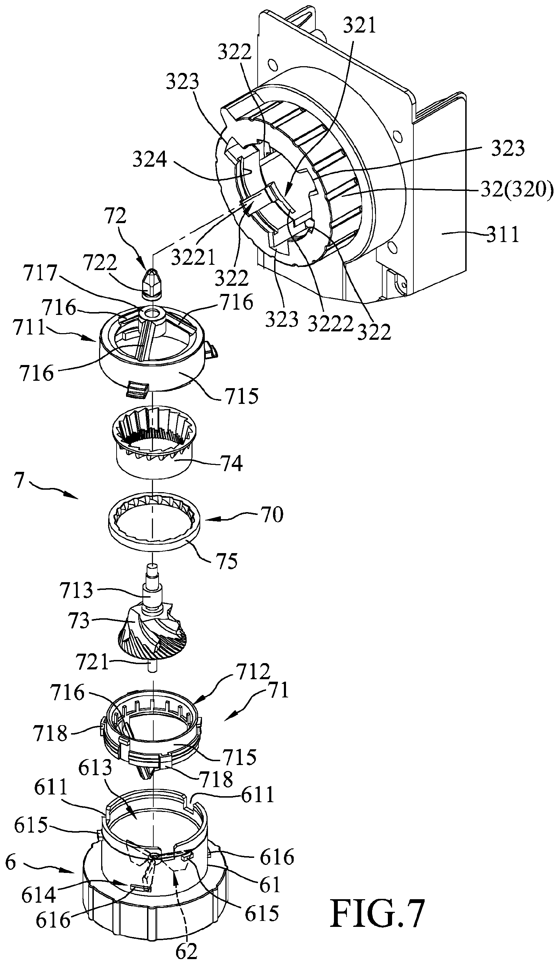

The transmitting mechanism 3 includes a suspending cassette unit 31 disposed above and extending forwardly from the housing mechanism 1, an upper bracket 32 installed on a bottom portion of a front end of the suspending cassette unit 31, and a gear unit 33 disposed within the suspending cassette unit 31. The suspending cassette unit 31 includes a lower cassette body 311 extending forwardly from an upper end of the stand 11, an upper cassette cover 312 covering the lower cassette body 311, and a front plate 313 interconnecting fronts of the lower cassette body 311 and the upper cassette cover 312. The lower cassette body 311 has a rear insert hole 314 and a front mounting hole 315 (see FIGS. 5 and 6) spaced apart from each other in a front-and-rear direction and formed therethrough in an up-and-down direction. The driving shaft 22 of the driving mechanism 2 is inserted into the rear insert hole 314. The upper cassette cover 312 has an upper cover hole 316 formed therethrough and communicating with the hopper mechanism 4 (see FIG. 5). The upper bracket 32 is engaged within the front mounting hole 315 and extends downwardly from a bottom portion of the lower cassette body 311. The upper bracket 32 has an upper annular wall 320 which surrounds an axis (L) in the up-and-down direction, and which has a first engagement feature 321 formed in an inner surface thereof (see FIG. 7) . In this embodiment, the first engagement feature 321 includes a plurality of first grooves 322, a plurality of wide axial grooves 323 and a plurality of annular grooves 324 formed in the inner surface of the upper annular wall 320. Each first groove 322 is of an L-shape and has an axial segment 3221 extending in the up-and-down direction, and an annular segment 3222 extending annularly from the axial segment 3221. Each wide axial groove 323 extends in the up-and-down direction and has a width larger than that of the axial segment 3221 of the first groove 322. Each annular groove 324 extends annularly and communicates with the wide axial groove 323, and is spaced apart from the annular segment 3222 in the up-and-down direction.

The gear unit 33 includes a gear box 331 disposed within the suspending cassette unit 31, and a first gear 332, a second gear 333 and a plurality of third gears 334 disposed within the gear box 331. The first and second gears 332, 333 are spaced apart from each other in the front-and-rear direction. The third gears 334 are interposed between and mesh with the first and second gears 332, 333 and mesh with each other. Specifically, the first gear 332 includes a first toothed rim 335 and a first center post 336 which is centered at and extends downwardly from a center of the first toothed rim 335 and which has a hexagonal cross-section to be coaxially inserted into the coupling hole 221 of the driving shaft 22 (see FIG. 5). The second gear 333 includes a second toothed rim 337 which meshes with one of the third gears 334, and a second center post 338 which is centered at and extends downwardly from a center of the second toothed rim 337 toward the grinding mechanism 5 (see FIG. 5). The second center post 338 has an axial bore 339 which is recessed upwardly from a bottom thereof and has a rectangular cross-section and which extends along the axis (L).

The hopper mechanism 4 is installed on the suspending cassette unit 31 and projects upwardly from the suspending cassette unit 31 and above the grinding unit 7. The hopper mechanism 4 surrounds the axis (L) and defines a hopper space 41 which penetrates in the up-and-down direction and tapers downwardly. The hopper mechanism 4 has a lateral notch 42 penetrating therethrough such that part of the gear unit 33 is mounted in the hopper space 41 over the lateral notch 42.

The grinding mechanism 5 includes a lower bracket 6 which is separably engaged with and extends downwardly from the upper bracket 32, and a grinding unit 7 which is disposed on and supported by the lower bracket 6 and below the hopper mechanism 4. The lower bracket 6 has a lower annular wall 61 which faces and is coaxial with the upper annular wall 320 of the upper bracket 32 to be rotatable relative to the upper annular wall 320, and a holding portion 62 which is integrally formed with and extends radially and inwardly of the lower annular wall 61 for holding the grinding unit 7 (see FIG. 7). Specifically, the lower annular wall 61 defines a channel 613 penetrating in the up-and-down direction to terminate at a powder dropping port 612, and has a plurality of notches 611 extending downwardly from a top edge thereof and circumferentially spaced apart from each other (see FIG. 7), and a second engagement feature 614 formed on an outer surface thereof. In this embodiment, the second engagement feature 614 includes a plurality of first blocks 615 which project radially and outwardly from the outer surface of the lower annular wall 61 and which are circumferentially spaced apart from each other, and a plurality of second blocks 616 which are disposed below the first blocks 615. Each first block 615 is inserted into and engaged in the annular segment 3222 of the corresponding first groove 322 from the axial segment 3221 and each second block 616 is engaged in the corresponding annular groove 324 so as to restrict the lower bracket 6 from movement relative to the upper bracket 32 in the up-and-down direction.

The grinding unit 7 includes a supporting assembly 71 installed and supported on the lower bracket 6, a revolving shaft assembly 72 mounted on the supporting assembly 71 through two opposite ends thereof, and a grinding assembly 70 supported by the supporting assembly 71 and sleeved around and driven by the revolving shaft assembly 72 for grinding a food ingredient. The grinding assembly 70 is made of metal, and includes a frusto-conical tubular inner burr 73 sleeved on and rotatable with the revolving shaft assembly 72, a ring outer burr 74 securely attached to the supporting assembly 71 and surrounding and radially spaced apart from the inner burr 73 and the revolving shaft assembly 72 for grinding the food ingredient, and a collar 23 sleeved on the outer burr 74.

With reference to FIGS. 5 and 7, specifically, the supporting assembly 71 includes an upper seat half 711, a lower seat half 712 coupled with the upper seat half 711 in the up-and-down direction and disposed on the lower bracket 6, an upper anti-friction bearing 713 disposed on the upper seat half 711, and a lower anti-friction bearing 714 disposed on the lower seat half 712. Each of the upper and lower seat halves 711, 712 includes an annular seat wall 715, a plurality of ribs 716 extending radially and inwardly from the annular seat wall 715 and toward each other and inclined upwardly (or downwardly) to terminate at a central ring 717. The upper and lower anti-friction bearings 713, 714 are disposed within the central rings 717 of the upper and lower seat halves 711, 712, respectively, to be aligned with each other along the axis (L). The lower seat half 712 further includes a plurality of engaging blocks 718 projecting outwardly from the annular seat wall 715 to be matingly inserted respectively into the notches 611 in the up-and-down direction so as to connect and hold the lower seat half 712 with and on the lower bracket 6.

The revolving shaft assembly 72 includes a revolving shaft 721 which is inserted into the upper and lower anti-friction bearings 713, 714 at upper and lower portions thereof to extend along and be rotatable about the axis (L) relative to the upper and lower seat halves 711, 712, and a coupling cap 722 which is non-rotatably coupled with an upper end of the revolving shaft 721. The coupling cap 722 has a rectangular cross-section to be coaxially inserted into and engaged with the axial bore 339 of the center post 338 such that the coupling cap 722 is separably removable from the second gear 333 in the up-and-down direction (i.e., in a downward direction).

In operation of the food grinding device, the driving motor 21 is operated to drive rotation of the driving shaft 22 and the first gear 332. Through the third gears 334 and the second gear 333, the revolving shaft assembly 72 including the revolving shaft 721 and the coupling cap 722 is revolved about the axis (L), and the inner burr 73 is rotated relative to the outer burr 74.

The user feeds the food ingredient into the hopper mechanism 4 from the upper cover hole 316. The food ingredient falls to the grinding unit 7 to be ground between the inner and outer burrs 73, 74 into powder. The powder then falls through the channel 613 and out of the grinding mechanism 5 from the powder dropping port 612 to be collected in the powder container 12.

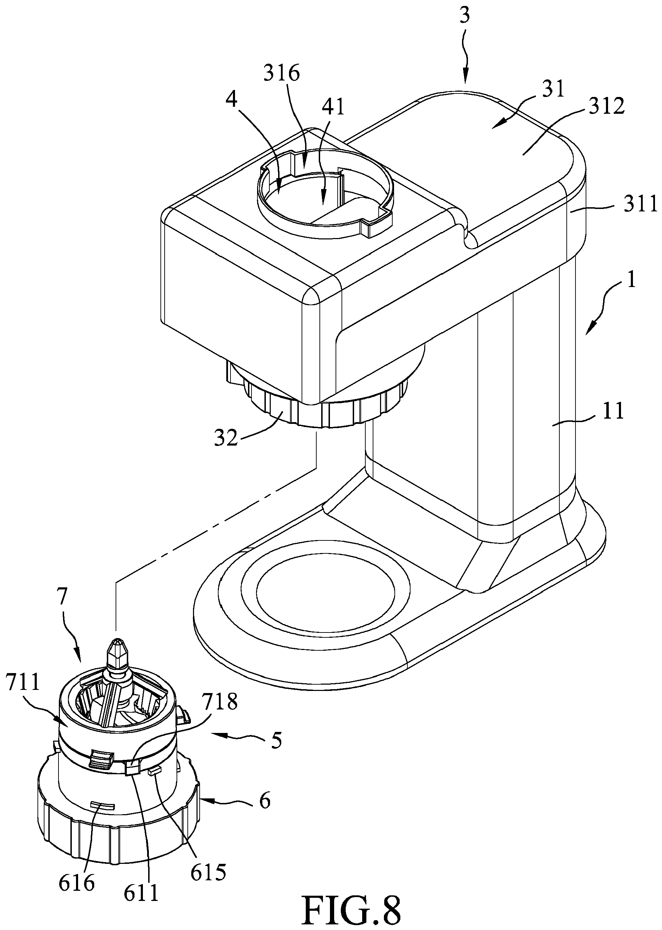

With reference to FIGS. 4, 7 and 8, in this embodiment, the grinding unit 7 and the lower bracket 6 (i.e., the grinding mechanism 5) are detachable from the upper bracket 32 to facilitate maintaining and cleaning operation of the grinding unit 7.

Specifically, with the coupling cap 722 insertable into and separable from the axial bore 339 of the second gear 333 in the up-and-down direction, the lower bracket 6 can be turned relative to the upper bracket 32 to align the first blocks 615 with the axial segments 3221 of the first grooves 322 and to bring the second blocks 616 into the corresponding wide axial grooves 323. The lower bracket 6 and the grinding unit 7 are then movable downwardly to be removed from the upper bracket 32. Subsequently, the grinding unit 7 can be removed upwardly from the lower bracket 6 by disengaging the engaging blocks 718 from the notches 611 so as to separate the grinding unit 7 from the lower bracket 6, as shown in FIG. 7. In this state, the lower bracket 6 and the grinding unit 7 can be cleaned separately.

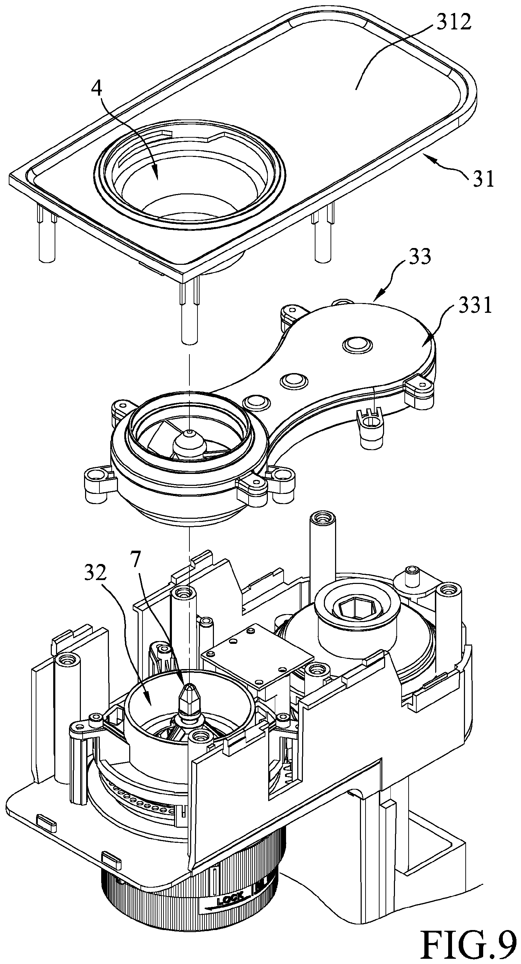

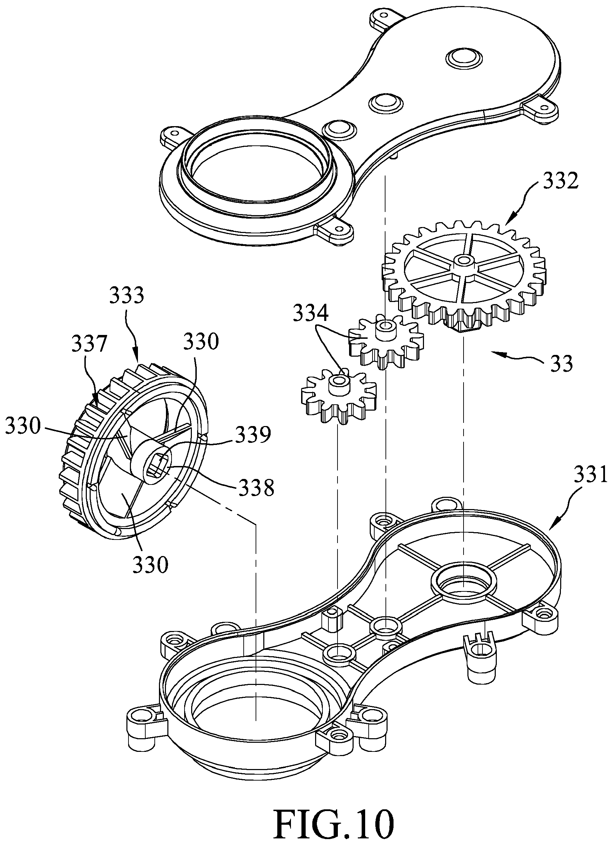

Referring to FIGS. 9 and 10, in another embodiment, the hopper mechanism 4 is integrally formed with the upper cassette cover 312 of the suspending cassette unit 31 and extends downwardly from the upper cassette cover 312 to be located above the gear unit 33. Part of the gear unit 33 is interposed between the hopper mechanism 4 and the upper bracket 32 to be located above the upper bracket 32. The second gear 333 of the gear unit 33 further includes a plurality of ribs 330 each of which extends radially to interconnect the second toothed rim 337 and the second center post 338. During the rotation of the second gear 333 and the revolving shaft assembly 72, the food ingredient fed from the hopper mechanism 4 is agitated by the ribs 330 to be smoothly moved downwardly. Besides, a downward air flow is generated as a result of rotation of the ribs 330 to render the downward movement of the food ingredient faster and smoother so as to improve the grinding efficiency of the grinding unit 7.

As illustrated, with the revolving shaft assembly 72 separably inserted into and engaged with the transmitting mechanism 3, the grinding unit 7 can be detached from the housing mechanism 1 for being maintained and cleaned.

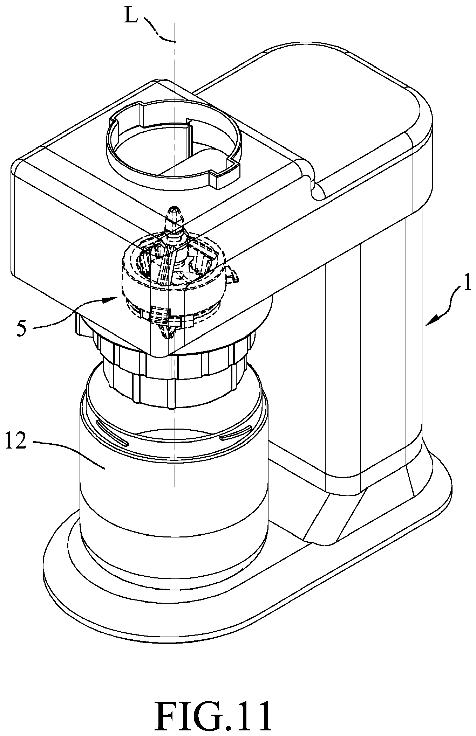

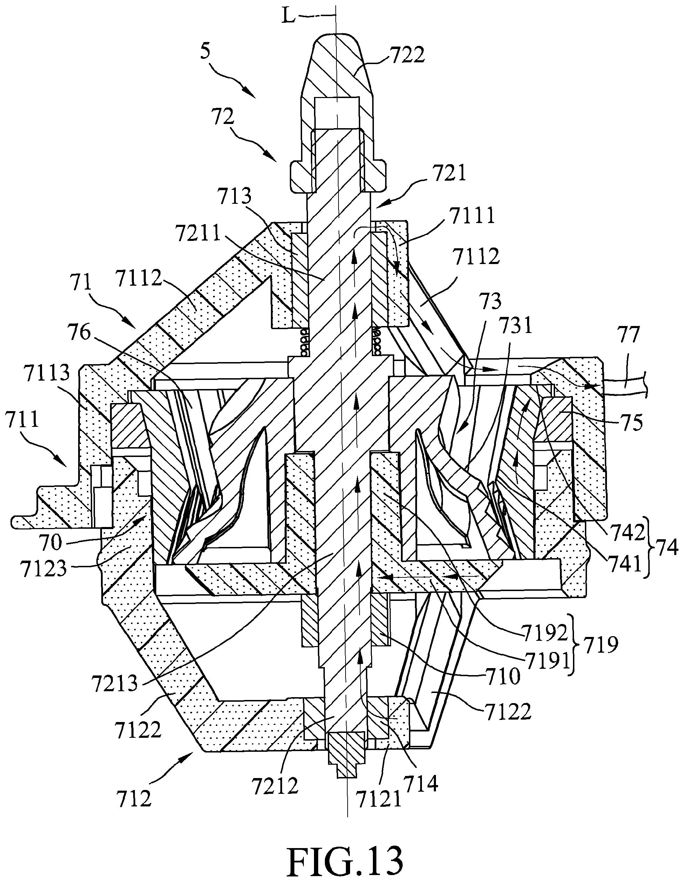

Further, referring to FIGS. 11 to 14, the supporting assembly 71 is substantially made of an electrically conductive composition, and is joined to the grinding assembly 70 by injection molding.

The revolving shaft 721 is made of metal, and includes an upper shaft portion 7211 and a lower shaft portion 7212 opposite to each other along the axis (L), and a connecting shaft portion 7213 interposed between and integrally interconnecting the upper and lower shaft portions 7211, 7212. The upper shaft portion 7211 is cylindrical to be non-rotatably fitted to the coupling cap 722, and the lower shaft portion 7212 is cylindrical with a smaller diameter than that of the upper shaft portion 7211.

The grinding assembly 70 is made of metal, and includes the frusto-conical inner burr 73 which is sleeved around and driven by the connecting shaft portion 7213 of the shaft 72 to rotate with the revolving shaft assembly 72, the annular outer burr 74 which surrounds and is radially spaced apart from the inner burr 73 to cooperate with the inner burr 73 for grinding the food ingredient, and a collar 75 which is sleeved on the outer burr 74. The inner burr 73 has an external surface 731 facing toward the outer burr 74 and having a plurality of curved teeth. The outer burr 74 is of a ring shape, and has an internal surface 741 with curved teeth to cooperate with the external surface 731 of the inner burr 73 to define a grinding space 76, and an annular upper flange surface 742 extending radially and outwardly from an upper end of the outer burr 74.

The aforementioned feature of the supporting assembly 71 "substantially made of an electrically conductive composition" means that most of the component parts of the supporting assembly 71 are made of an electrically conductive composition (which may or may not contain metal), while some other component parts thereof may be made only of metal. However, in other embodiments of the present disclosure, each component part of the supporting assembly 71 may be made of the electrically conductive composition. Alternatively, each component part of the support assembly 71 may be substantially made of the electrically conductive composition, namely, each component part of the supporting assembly 71 may be made of the electrically conductive composition as the primary material, and may contain other suitable additives.

More specifically, the supporting assembly 71 includes an upper anti-friction bearing 713 sleeved around the upper shaft portion 7211, a lower anti-friction bearing 714 sleeved around the lower shaft portion 7212, a middle bracket 719 sleeved around the connecting shaft portion 7213 and interposed between the connecting shaft portion 7213 and the inner burr 73, a retaining ring 710 sleeved around the connecting shaft portion 7213 and below the middle bracket 719, a lower seat half 712 sleeved around the lower shaft portion 7212 and surrounding the outer burr 74, an upper seat half 711 sleeved around the upper shaft portion 7211 and engaged with the outer burr 74, and an electric cable 77 electrically connected with the upper seat half 711.

The upper and lower anti-friction bearings 713, 714 are made of metal. The upper anti-friction bearing 713 is interposed between the upper shaft portion 7211 and the upper seat half 711. The lower anti-friction bearing 714 is interposed between the lower shaft portion 7212 and the lower seat half 712. Hence, the revolving shaft 721 is rotatable relative to the upper and lower seat halves 711, 712.

The middle bracket 719 is made of the aforesaid electrically conductive composition, is sleeved on the connecting shaft portion 7213 by a press-fit manner, and is joined to the inner burr 73 by injection molding such that the middle bracket 719 is irremovably and firmly attached to the inner burr 73. Specifically, the middle bracket 719 includes a disc portion 7191 and a hollow post 7192 which extends from and is integrally formed with the disc portion 7191 to be sleeved on the connecting shaft portion 7213.

The aforesaid electrically conductive composition may include a plastic constituent and an electrically conductive constituent. Based on the total weight of the electrically conductive composition (i.e. 100 wt%), the plastic constituent is present in an amount of 65 wt% to 90 wt%, and the electrically conductive constituent is present in an amount of 10 wt% to 35 wt%. For example, the plastic constituent is present in an amount of 70 wt%, and the electrically conductive constituent is present in an amount of 30 wt%.

The plastic constituent may be selected from the group consisting of nylon, polypropylene (PP), polycarbonate (PC), polystyrene (PS), an acrylonitrile-styrene copolymer (SAN), acrylonitrile butadiene styrene (ABS), high density polyethylene (HDPE), polyoxymethylene (POM), polybutylene terephthalate (PBT), and combinations thereof. The electrically conductive constituent may be selected from the group consisting of metal, conductive carbon fiber, graphite, conductive carbon nanotubes, conductive polymers, and combinations thereof.

Alternatively, the aforesaid electrically conductive composition may be a conductive polymer.

The retaining ring 710 is made of metal, and is sleeved on the connecting shaft portion 7213 and disposed between the middle bracket 719 and the lower anti-friction bearing 714 to be spaced apart from the lower anti-friction bearing 714. The retaining ring 710 is disposed to abut against the middle bracket 719 to prevent undesired downward movement of the middle bracket 719 relative to the connecting shaft portion 7213.

The lower seat half 712 is made of the same material as that of the middle bracket 719. The lower seat half 712 includes a lower annular portion 7121 which is joined to an outer surface of the lower anti-friction bearing 714 by injection molding, three connecting rods 7122 which extend upwardly and radially outwardly from the lower annular portion 7121, and a ring wall 7123 which is integrally connected with the connecting rods 7122 and which is sleeved around the outer burr 74.

The upper seat half 711 is made of the same material as that of the middle bracket 719. The upper seat half 711 includes an upper annular portion 7111 which is joined to an outer surface of the upper anti-friction bearing 713 by injection molding, three connecting rods 7112 which extend downwardly and radially outwardly from the upper annular portion 7111, and a ring wall 7113 which is integrally connected with the connecting rods 7112 and which is sleeved around the ring wall 7123 of the lower seat half 712 so as to be matingly coupled with each other to support the revolving shaft 721. With the upper and lower anti-friction bearings 713, 714, the revolving shaft assembly 72 is aligned along the axis (L) to be steadily rotated about the axis (L).

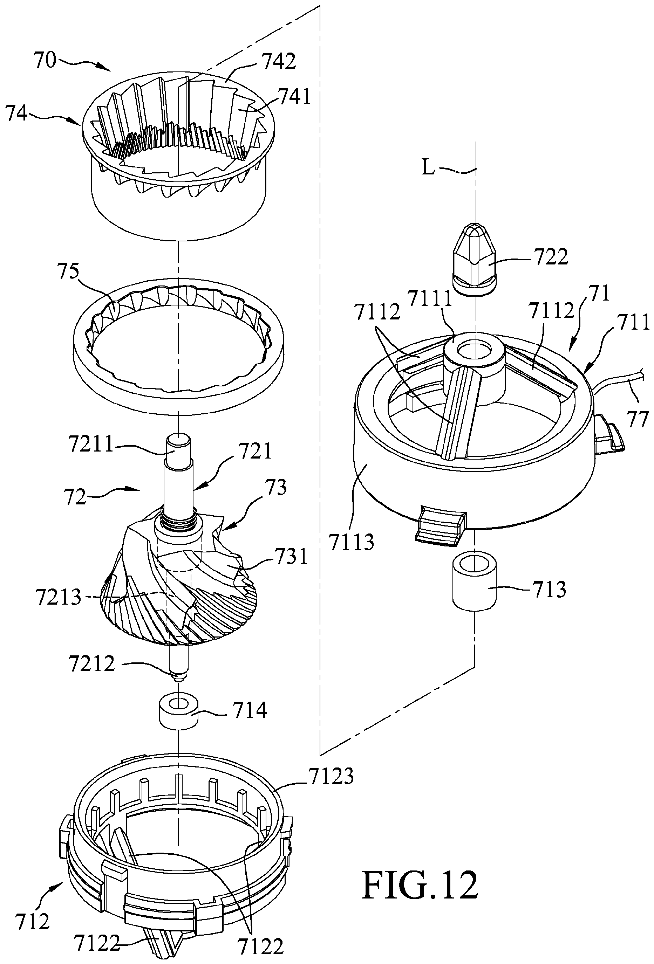

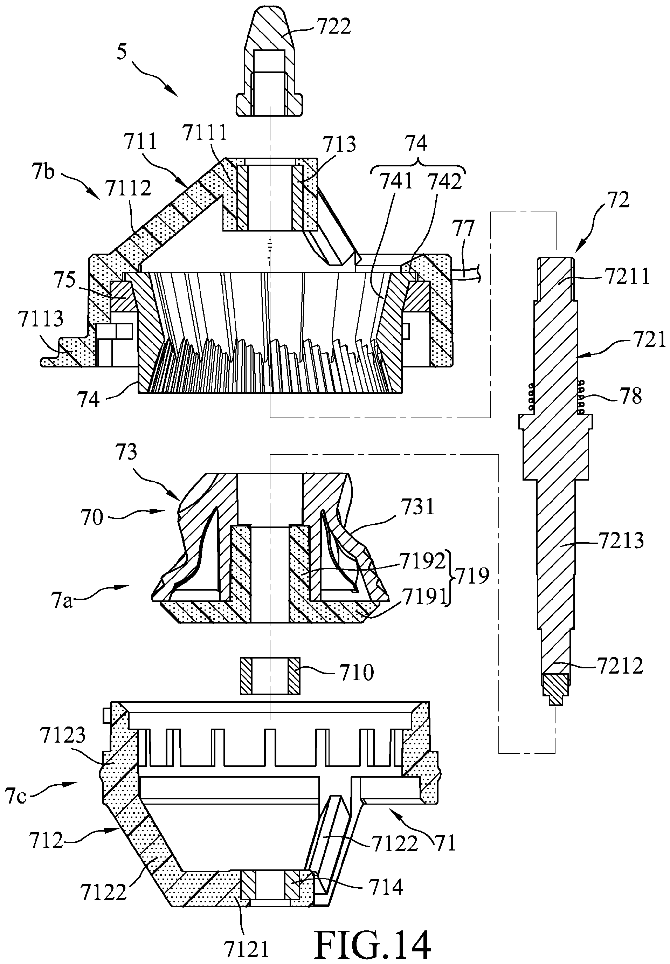

With reference to FIGS. 12 to 14, in producing the component parts of the grinding mechanism 5, the middle bracket 719 is formed by injection molding, and the middle bracket 719 is joined to the inner burr 73 during a cooling molding process so as to bond the middle bracket 719 to the inner burr 73 firmly and tightly to form as an inner burr assembly (7a), as shown in FIG. 14. Subsequently, the upper seat half 711 is formed by injection molding, and the upper seat half 711 is joined to the outer surface of the upper anti-friction bearing 713 and the annular upper flange surface 742 of the outer burr 74 so as to bond the upper seat half 711 to the outer burr 74 and the upper anti-friction bearing 713 firmly and tightly to form as an outer burr assembly (7b), as shown in FIG. 14. Finally, the lower seat half 712 is formed by injection molding, and the lower seat half 712 is joined to the outer surface of the lower anti-friction bearing 714 so as to bond them together firmly and tightly to form as a supporting assembly (7c), as shown in FIG. 14.

Next, the assembly operation of the grinding mechanism 5 is described as follows. The inner burr assembly (7a) is first sleeved on the connecting shaft portion 7213 in a press-fit manner, and the retaining ring 710 is then sleeved on the connecting shaft portion 7213. Subsequently, the outer burr assembly (7b) is sleeved around the upper shaft portion 7211, and a biasing spring 78 abuts against and supports the outer burr assembly (7b) . The supporting assembly (7c) is then sleeved around the lower shaft portion 7212 to have the ring wall 7123 of the lower bracket 712 positioned between the outer burr 74 and the ring wall 7113 of the upper seat half 711. Finally, the coupling cap 722 is capped on the upper shaft portion 7211.

In use, the driving mechanism of the food grinding device is operated to drive the revolving shaft assembly 72 to rotate about the axis (L) such that the external surface 731 of the inner burr 73 is rotated relative to the internal surface 741 of the outer burr 74 to grind the food ingredient in the grinding space 76 into powder, which falls into the powder container 12.

In this embodiment, the revolving shaft assembly 72 is made of metal, and the middle bracket 719, the lower seat half 712 and the upper seat half 711 are made of the aforesaid electrically conductive composition, and are respectively joined, by injection molding, to the inner burr 73, the lower anti-friction bearing 714 and the outer burr 74 made of metal without having any void existing in the joining so as to minimize the electrical resistance of the assemblies (7a, 7b, 7c) . Therefore, electric charges generated during the grinding process of the grinding mechanism 5 can be dispersed to improve the problem of flying and remaining of the powder due to electric charge accumulation.

Moreover, in this embodiment, with the electric cable 77 electrically connected with the upper seat half 711, the electric charges can be discharged readily through the lower bracket 35, the lower anti-friction bearing 714, the middle bracket 719, the inner burr 73, the revolving shaft assembly 72, the upper anti-friction bearing 713, the outer burr 74, the upper seat half 711 and the electric cable 77 and out of the grinding space 76, which further effectively improves the problem of flying powder generated as a result of the electric charge accumulation in the grinding mechanism 5 and the powder, and reduces the adherence of powder to the grinding mechanism 5.

## Claims

1. A food grinding device comprising a housing mechanism (1), a driving mechanism (2) disposed within said housing mechanism (1), a transmitting mechanism (3) coupled with said driving mechanism (2) and extending forwardly from said housing mechanism (1), and a grinding mechanism (5) coupled with said transmitting mechanism (3) and spaced apart from said driving mechanism (2) for grinding a food ingredient into powder, said grinding mechanism (5) defining a powder dropping port (612) penetrating in an up-and-down direction, the food grinding device being **characterized in that**:
said grinding mechanism (5) includes a revolving shaft assembly (72) which is separably inserted into and engaged with an underside of said transmitting mechanism (3) to rotate about an axis (L) in the up-and-down direction.

2. The food grinding device as claimed in Claim 1, **characterized in that** said grinding mechanism (5) includes a grinding unit (7) including said revolving shaft assembly (72), said grinding unit (7) further including a tubular inner burr (73) which is sleeved on and rotatable with said revolving shaft assembly (72), a supporting assembly (71) which is sleeved around said revolving shaft assembly (72) to rotatably support said revolving shaft assembly (72) and to align said revolving shaft assembly (72) along the axis (L), and a ring outer burr (74) which is securely attached to said supporting assembly (71) and which surrounds and is spaced apart from said revolving shaft assembly (72) such that said revolving shaft assembly (72) is operably rotatable relative to said supporting assembly (71) to bring said tubular inner burr (73) into rotation relative to said ring outer burr (74) so as to grind the food ingredient therebetween into the powder.

3. The food grinding device as claimed in Claim 2, **characterized in that** said transmitting mechanism (3) includes a suspending cassette unit (31) extending forwardly from said housing mechanism (1) and having a mounting hole (315) formed therethrough in the up-and-down direction, an upper bracket (32) installed on said suspending cassette unit (31) and within said mounting hole (315), and a gear unit (33) disposed within said suspending cassette unit (31) and coupled with said driving mechanism (2), said revolving shaft assembly (72) being separably inserted into and engaged with said gear unit (33), said grinding mechanism (5) further including a lower bracket (6) which extends downwardly from said upper bracket (32) and which supports said supporting assembly (71) for holding said grinding unit (7) thereon, said lower bracket (6) defining said powder dropping port (612), and being separably connected with said upper bracket (32) such that said lower bracket (6) and said grinding unit (7) disposed thereon are removable from said upper bracket (32).

4. The food grinding device as claimed in Claim 3, **characterized in that** said upper bracket (32) has an upper annular wall (320) which surrounds the axis (L) and which has a first engagement feature (321), said lower bracket (6) having a lower annular wall (61) which faces and is coaxial with said upper annular wall (320) to be rotatable relative to said upper annular wall (320) and which has a second engagement feature (614), one of said first and second engagement features (321, 614) including at least one first groove (322) which has an axial segment (3221) extending in the up-and-down direction, and an annular segment (3222) extending annularly from said axial segment (3221), the other one of said first and second engagement features (321, 614) including at least one first block (615) which is inserted into and engaged in said annular segment (3222) of said first groove (322) from said axial segment (3221) so as to restrict said lower bracket (6) from movement relative to said upper bracket (32) in the up-and-down direction.

5. The food grinding device as claimed in Claim 3, **characterized in that** said gear unit (33) includes a first gear (332) coaxially coupled with said driving mechanism (2), a second gear (333) spaced apart from said first gear (332) such that said revolving shaft assembly (72) is separably and coaxially inserted into and engaged with said second gear (333), and a plurality of third gears (334) meshing with and interposed between said first and second gears (332, 333) and meshing with each other.

6. The food grinding device as claimed in Claim 5, **characterized in that** said second gear (333) has an axial bore (339), said revolving shaft assembly (72) including a revolving shaft (721) which extends along the axis (L), and a coupling cap (722) which is non-rotatably coupled with an upper end of said revolving shaft (721) and which has an insert portion that is non-rotatably inserted into said axial bore (339) along the axis (L) so as to permit rotation of said revolving shaft (721) with said second gear (333) .

7. The food grinding device as claimed in Claim 3, further **characterized by** a hopper mechanism (4) which is installed on said suspending cassette unit (31) and which projects upwardly from said suspending cassette unit (31) and above said grinding unit (7), said hopper mechanism (4) surrounding the axis (L) and defining a hopper space (41) which penetrates in the up-and-down direction and tapers downwardly, said hopper mechanism (4) having a lateral notch (42) penetrating therethrough such that part of said gear unit (33) is mounted in said hopper space (41) over said lateral notch (42).

8. The food grinding device as claimed in Claim 5, **characterized in that** said second gear (333) includes a toothed rim (337) which meshes with one of said third gears (334), a center post (338) which is centered at a center of said toothed rim (337) and which extends along the axis (L) such that said revolving shaft assembly (72) is inserted into and engaged with said center post (338), and a plurality of ribs (330) each of which extends radially to interconnect said toothed rim (337) and said center post (338).

9. The food grinding device as claimed in Claim 1, **characterized in that** said grinding mechanism (5) includes a grinding unit (7) including said revolving shaft assembly (72), said grinding unit (7) further including a grinding assembly (70) which is sleeved around and driven by said revolving shaft assembly (72) for grinding the food ingredient, and a supporting assembly (71) which is disposed to support said revolving shaft assembly (72), said supporting assembly (71) being substantially made of an electrically conductive composition, and being joined to said grinding assembly (70) by injection molding, said electrically conductive composition including a plastic constituent and an electrically conductive constituent, said plastic constituent being selected from the group consisting of nylon, polypropylene, polycarbonate, polystyrene, an acrylonitrile-styrene copolymer, acrylonitrile butadiene styrene, high density polyethylene, polyoxymethylene, polybutylene terephthalate, and combinations thereof, said electrically conductive constituent being selected from the group consisting of metal, conductive carbon fiber, graphite, conductive carbon nanotubes, conductive polymers, and combinations thereof.

10. The food grinding device as claimed in Claim 9, **characterized in that** said revolving shaft assembly (72) includes an upper shaft portion (7211) and a lower shaft portion (7212) opposite to each other, and a connecting shaft portion (7213) interposed between and interconnecting said upper and lower shaft portions (7211, 7212), said grinding unit (7) including an inner burr (73) which is sleeved around and driven by said connecting shaft portion (7213) to rotate with said revolving shaft assembly (72), and an outer burr (74) which surrounds and is radially spaced apart from said inner burr (73) to cooperate with said inner burr (73) for grinding the food ingredient, said supporting assembly (71) including an upper seat half (711) and a lower seat half (712) which are made of said electrically conductive composition and which are matingly coupled with each other to support said revolving shaft assembly (72), said upper seat half (711) being joined to said outer burr (74) by injection molding so as to support said outer burr (74).

11. The food grinding device as claimed in Claim 10, **characterized in that** said supporting assembly (71) further includes an upper anti-friction bearing (713) and a lower anti-friction bearing (714) which are electrically conductive and which are sleeved around said upper and lower shaft portions (7211, 7212), respectively, said upper anti-friction bearing (713) being interposed between said upper shaft portion (7211) and said upper seat half (711), said lower anti-friction bearing (714) being interposed between said lower shaft portion (7212) and said lower seat half (712), said upper seat half (711) being joined to said upper anti-friction bearing (713) by injection molding, said lower seat half (712) being joined to said lower anti-friction bearing (714) by injection molding.

12. The food grinding device as claimed in Claim 10, **characterized in that** said supporting assembly (71) further includes a middle bracket (719) which is sleeved around said connecting shaft portion (7213) and interposed between said connecting shaft portion (7213) and said inner burr (73), said middle bracket (719) being made of said electrically conductive composition and being joined to said inner burr (73) by injection molding.

13. The food grinding device as claimed in Claim 12, **characterized in that**, based on the total weight of said electrically conductive composition, said plastic constituent is present in an amount of 65 wt% to 90 wt%, and said electrically conductive constituent is present in an amount of 10 wt% to 35 wt%.

14. The food grinding device as claimed in any of Claims 9 to 12, **characterized in that** said electrically conductive composition is a conductive polymer.

15. The food grinding device as claimed in Claim 10, **characterized by** an electric cable (77) which is electrically connected with said upper seat half (711) .
